# EUROPÄISCHE PATENTSCHRIFT

(11) **EP 0 854 067 B1**
(45) Veröffentlichungstag und Bekanntmachung des Hinweises auf die Patenterteilung: **25.08.2004**
(21) Anmeldenummer: 97120703.0
(22) Anmeldetag: 26.11.1997
(51) Int. Cl.: B60R 21/00

(54) **Motorraumanordnung eines Kraftfahrzeugs**
Arrangement of engine compartment for automotive vehicle
Arrangement de compartiment moteur pour véhicule automobile

(30) Priorität: 16.01.1997 DE 19701367
(43) Veröffentlichungstag der Anmeldung: 22.07.1998
(73) Patentinhaber: Volkswagen Aktiengesellschaft, 38436 Wolfsburg (DE)
(72) Erfinder: Dau, Wolfram, 38444 Wolfsburg (DE); Lange, Wolfgang, Dipl.-Ing., 38448 Wolfsburg (DE)

(56) Entgegenhaltungen:
- EP-A- 0 477 654
- WO-A-90/05083
- DE-A- 2 750 179
- FR-A- 2 710 583
- JP-Y- 61 007 963
- US-A- 4 060 011

## Beschreibung

Die Erfindung bezieht sich auf eine Motorraumanordnung eines Kraftfahrzeugs gemäß dem Oberbegriff von Anspruch 1.

Aus der gattungsbildenden JP 61 007963 Y ist eine Motorraumanordnung mit einem Hilfsrahmen bekannt, der seinerseits an einem Fahrzeugaufbau über zwei Haltearme befestigt ist, wobei die Haltearme Sollbruchstellen aufweisen und wobei der Hilfsrahmen mit radführenden Fahrwerksbauteilen verbunden ist und Antriebswellen in Form von Gelenkwellen, die von einem Verteilerdifferential zu den Rädern des Kraftfahrzeugs führen, derartig in Fahrtrichtung vor den Haltearmen angeordnet sind, dass die Haltearme bei einem Frontalaufprall des Fahrzeugs durch eine Rückwärtsbewegung der Antriebswelle samt Verteilerdifferential gegenüber dem Hilfsrahmen abtrennbar ausgebildet sind.

Eine weitere Motorraumanordnung ist aus der DE 43 26 396 A1 bekannt. Hier wird der Hilfsrahmen zur Aufnahme des Antriebsmotors verwendet, wobei der Hilfsrahmen an zwei Lagerstellen mit dem Vorbaulängsträger verbunden ist. Die Lagerstellen sind dabei derartig dimensioniert, dass bei einem Frontalaufprall der Vorbaulängsträger verkürzt und die hintere Lagerstelle des Hilfsrahmens am Vorbaulängsträger zerstört wird, während die vordere Lagerstelle intakt bleibt. Hierdurch kann der Hilfsrahmen mitsamt Antriebsmotor nach unten verschoben werden, ohne in die Fahrgastzelle einzudringen.

Schließlich ist mit der WO 90 05083 A eine Motorraumanordnung mit einem Hilfsrahmen aus Leichtmetallguss offenbart.

Der Erfindung liegt die Aufgabe zugrunde, eine Motorraumanordnung für ein Kraftfahrzeug zu schaffen, die im Falle eines Frontalaufpralls das Eindringen von Bauteilen aus dem Motorraum in die Fahrgastzelle möglichst weitgehend verhindert.

Diese Aufgabe wird durch eine Motorraumanordnung nach Anspruch 1 gelöst. Die Unteransprüche beschreiben bevorzugte Weiterbildungen der erfindungsgemäßen Motorraumanordnung.

Es ist somit vorgesehen, die Motorraumanordnung derartig zu gestalten, dass im Falle eines Frontalaufpralls Motor- oder Getriebewellen, die in das Fahrzeug gedrückt werden und somit relativ zum Fahrzeugaufbau und anderen Bauteilen des Fahrwerks eine Rückwärtsbewegung beschreiben, an Haltearme stoßen, mit denen der Hilfsrahmen am Fahrzeugaufbau gelenkig befestigt ist. Hierdurch brechen bzw. reißen die Haltearme ab, so dass der Hilfsrahmen nach unten wegfallen kann. Im Motorraum wird so ein entsprechender Freiraum gebildet, der als Deformationszone zum Auffangen des Aufprallschwungs dient, ohne dass Bauteile aus dem Motorraum in die Fahrgastzelle gedrückt werden.

Ferner werden die von einem im Motorraum angeordneten Verteilerdifferential seitlich nach außen zu den Rädern führenden Gelenkwellen benutzt, um im Falle des Frontalaufpralls ein Abbrechen der Haltearme des Hilfsrahmens zu bewirken.

Schließlich ist herauszustellen, dass das Verteilerdifferential derartig vor einem Hilfsrahmenmittelteil angeordnet und das Hilfsrahmenmittelteil derartig aus einem Gussmaterial gebildet ist, dass infolge des Frontalaufpralls und eines Anstoßens des Verteilerdifferentials gegen das Hilfsrahmenmittelteil ein Zerbrechen desselben realisierbar sowie ein Bruchteil desselben zur Versperrung eines im Motorraumbereich vor der Fahrgastzelle befindlichen Tunnels erzeugbar ist.

Der Hilfsrahmen der erfindungsgemäßen Motorraumanordnung kann insbesondere nach Anspruch 2 zur Aufnahme von Radführungslenkem dienen. In diesem Fall werden beim Abbrechen der Haltearme die Räder zusammen mit dem Hilfsrahmen vom Fahrzeugaufbau getrennt, so dass ihnen eine weitere Rückwärtsbewegung beim Frontalaufprall ermöglicht wird.

Die Erfindung wird im folgenden anhand der beiliegenden Zeichnungen an einer Ausführungsform näher erläutert. Es zeigen:

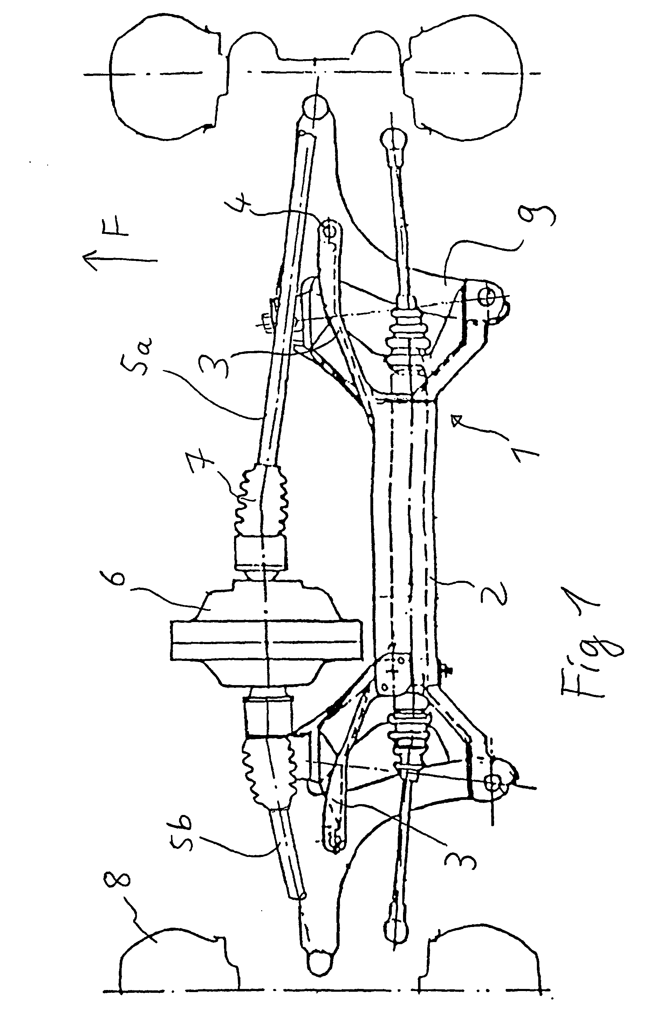

- Figur 1: eine Draufsicht auf einen Ausschnitt einer Motorraumordnung gemäß der Ausführungsform der Erfindung;

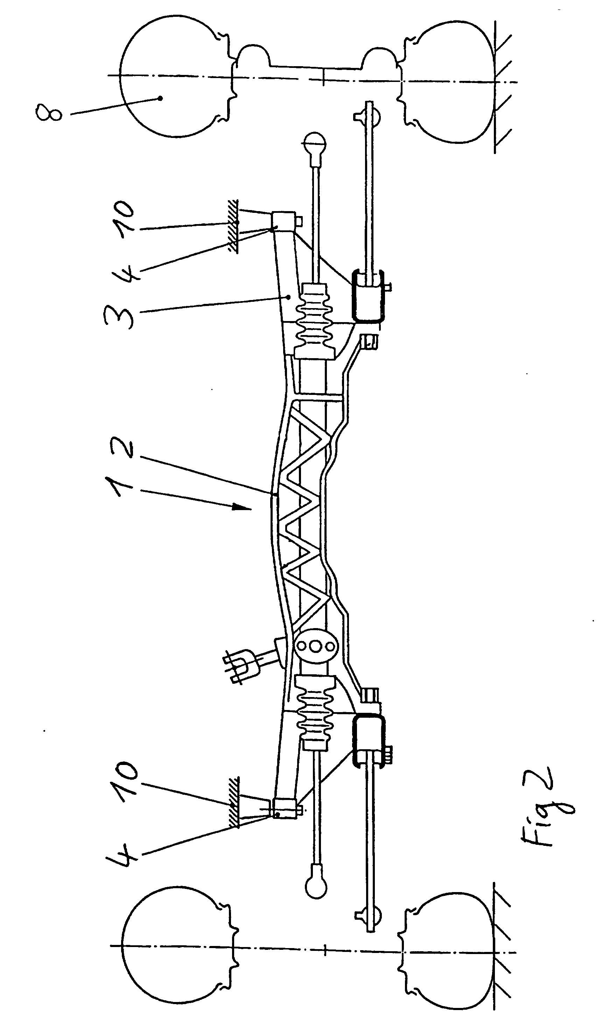

- Figur 2: eine Vorderansicht des Hilfsrahmens aus Figur 1.

Ein Hilfsrahmen 1 weist ein Hilfsrahmenmittelteil 2 auf, an dessen seitlichen Enden Konsolen angeordnet sind, an denen Haltearme 3 sich nach oben erstrecken und an Anlenkpunkten 4 am Fahrzeugaufbau 10 angelenkt sind. Die Haltearme 3 zeigen in Draufsicht eine giebelartige beziehungsweise dreieckige Form und sind in Fahrzeuglängsrichtung brettartig beziehungsweise dünn ausgebildet. Der Hilfsrahmen 1 ist über Querlenker 9 mit den Rädern 8 verbunden.

Erfindungsgemäß ist ein Verteilerdifferential 6 über Faltenbälge 7 und Gelenkwellen 5a, 5b derartig angeordnet, dass die Antriebswellen/Gelenkwellen 5a und 5b in Fahrtrichtung hinter den Haltearmen 3 angeordnet sind.

Im Falle eines Frontalaufpralls wird das Fahrzeug von der Frontseite her nach hinten eingedrückt. Das Verteilerdifferential 6 und die Gelenkwellen 5a, 5b erfahren dabei gegenüber dem Fahrzeugaufbau 10 und dem Hilfsrahmen 1 eine der Fahrtrichtung F entgegengesetzte Rückwärtsbewegung, so dass die Gelenkwellen 5a, 5b gegen den oberen Bereich der Haltearme 3 stoßen und diese dabei abbrechen. Der Hilfsrahmen 1 mitsamt Radträgem und Rädern 8 ist somit vom Fahrzeugaufbau 10 getrennt, so dass er nach unten wegfallen kann. Im Motorraum entsteht hierdurch ein entsprechender Freiraum, der für die Energie absorbierende Verformung des Vorderwagens beim weiteren Zusammenstauchen während des Frontalaufpralls genutzt werden kann, ohne dass Bauteile aus dem Motorraum in die Fahrgastzelle gedrückt werden.

Da das Verteilerdifferential 6 gegen das Hilfsrahmenmittelteil 2 gedrückt wird, zerbricht das Hilfsrahmenmittelteil 2. Das so unterteilte Hilfsrahmenmittelteil 2 kann sich anschließend vor den Tunnel legen, der im Bereich der Abgasrohrführung vor der Fahrgastzelle gebildet wird, so dass das Hilfsrahmenmittelteil 2 in diesem Tunnel sperrend wirkt und das weitere Eindringen von Bauteilen aus dem Motorraum in die Fahrgastzelle verhindern kann.

Der Hilfsrahmen 1 ist dabei vorteilhafterweise aus einem Gussmaterial, z. B. Aluminium, ausgebildet, da die Haltearme 3 und das Hilfsrahmenmittelteil 2 dann aufgrund des spröden Materials eine starke Bruchneigung besitzen.

Dabei kann der Hilfsrahmen 1 einteilig oder auch dreiteilig ausgebildet werden, wobei im letzteren Fall an die äußeren Enden des Hilfsrahmenmittelteils 2 Konsolen angeordnet werden, an denen die Haltearme 3 angeordnet sind.

## Patentansprüche

1. Motorraumanordnung eines Kraftfahrzeugs mit einem Hilfsrahmen (1), der an einem Fahrzeugaufbau (10) über zwei Haltearme (3) befestigt ist, die ihrerseits Sollbruchstellen aufweisen, wobei der Hilfsrahmen (1) ferner mit radführenden Fahrwerksbauteilen (9) verbunden ist und Antriebswellen (5a, 5b) derartig in Fahrtrichtung vor den Haltearmen (3) angeordnet sind, dass sämtliche Haltearme (3) bei einem Frontalaufprall des Fahrzeugs durch eine Rückwärtsbewegung der Antriebswellen (5a, 5b) gegenüber dem Hilfsrahmen (1) abtrennbar ausgebildet sind und wobei die Antriebswellen Gelenkwellen (5a, 5b) von einem Verteilerdifferential (6) zu den Rädern (8) sind,
**dadurch gekennzeichnet, dass**
das Verteilerdifferential (6) derartig vor einem Hilfsrahmenmittelteil (2) angeordnet und das Hilfsrahmenmittelteil (2) derartig aus einem Gussmaterial gebildet ist, dass infolge des Frontalaufpralls und eines Anstoßens des Verteilerdifferentials (6) gegen das Hüfsrahmenmittelteil (2) ein Zerbrechen desselben realisierbar sowie ein Bruchteil desselben zur Versperrung eines im Motorraumbereich vor der Fahrgastzelle befindlichen Tunnels erzeugbar ist.

2. Motorraumanordnung nach Anspruch 1, **dadurch gekennzeichnet, dass** der Hilfsrahmen (1) über Querlenker (9) mit Rädern (8) verbunden ist.

3. Motamaumanordnung nach einem der Ansprüche 1 und 2, **dadurch gekennzeichnet, dass** die Haltearme (3) aus einem Gussmaterial, vorzugsweise Aluminium, gefertigt sind.

4. Motorraumanordnung nach einem der Ansprüche 1 bis 3, **dadurch gekennzeichnet, dass** der Hilfsrahmen (1) einteilig ausgebildet ist.

5. Motorraumanordnung nach einem der Ansprüche 1 bis 3, **dadurch gekennzeichnet, dass** der Hilfsrahmen (1) dreiteilig ausgebildet ist, wobei die Haltearme (3) an äußeren Konsolen des Hilfsrahmens (1) angeordnet sind, die über das Hilfsrahmenmittelteil (2) miteinander verbunden sind.

## Claims

1. Engine-space arrangement of a motor vehicle, with an auxiliary frame (1) which is fastened to a vehicle body (10) via two holding arms (3) which themselves have predetermined breaking points, the auxiliary frame (1) being connected, furthermore, to wheel-guiding chassis components (9), and drive shafts (5a, 5b) being arranged in front of the holding arms (3) in the direction of travel in such a way that all the holding arms (3) are designed to be separable with respect to the auxiliary frame (1) as a result of a backward movement of the drive shafts (5a, 5b) in the event of a head-on collision of the vehicle, and the drive shafts being cardan shafts (5a, 5b) from a power divider differential (6) to the wheels (8), **characterized in that** the power divider differential (6) is arranged in front of an auxiliary-frame middle part (2) in such a way and the auxiliary-frame middle part is formed from a cast material in such a way that, as a result of the head-on collision and of a bumping of the power divider differential (6) against the auxiliary-frame middle part (2), a breaking of the latter can be implemented and a fragment of the latter can be produced in order to block a channel located in the engine-space region in front of the passenger compartment.

2. Engine-space arrangement according to Claim 1, **characterized in that** the auxiliary frame (1) is connected to wheels (8) via transverse links (9).

3. Engine-space arrangement according to one of Claims 1 and 2, **characterized in that** the holding arms (3) are manufactured from a cast material, preferably aluminium.

4. Engine-space arrangement according to one of Claims 1 to 3, **characterized in that** the auxiliary frame (1) is of one-part design.

5. Engine-space arrangement according to one of Claims 1 to 3, **characterized in that** the auxiliary frame (1) is of three-part design, the holding arms (3) being arranged on outer brackets of the auxiliary frame (1) which are connected to one another via the auxiliary-frame middle part (2).

## Revendications

1. Agencement de compartiment moteur pour un véhicule automobile comprenant un cadre auxiliaire (1) qui est fixé sur une carrosserie de véhicule (10) par le biais de deux bras de fixation (3) qui présentent pour leur part des points destinés à la fracture, le cadre auxiliaire (1) étant en outre connecté à des composants du mécanisme de roulement (9) guidant les roues et des arbres d'entraînement (5a, 5b) étant disposés de telle sorte dans la direction de conduite avant les bras de fixation (3) que tous les bras de fixation (3) soient réalisés de manière séparable dans le cas d'une collision frontale du véhicule par un mouvement vers l'arrière des arbres d'entraînement (5a, 5b) par rapport au cadre auxiliaire (1) et les arbres d'entraînement étant des arbres articulés (5a, 5b) allant d'un différentiel distributeur (6) aux roues (8),
**caractérisé en ce que**
le différentiel distributeur (6) est disposé de telle sorte avant une partie centrale du cadre auxiliaire (2) et la partie centrale du cadre auxiliaire (2) est formée en un matériau en fonte de telle sorte que suite à la collision frontale et à un impact du différentiel distributeur (6) contre la partie centrale du cadre auxiliaire (2), une rupture de celle-ci puisse se produire et une fraction de celle-ci puisse être produite pour le blocage d'un tunnel se trouvant dans la région du compartiment moteur devant l'habitacle de conduite.

2. Agencement de compartiment moteur selon la revendication 1, **caractérisé en ce que** le cadre auxiliaire (1) est connecté aux roues (8) par le biais de bras latéraux (9).

3. Agencement de compartiment moteur selon l'une quelconque des revendications 1 et 2, **caractérisé en ce que** les bras de fixation (3) sont fabriqués en un matériau en fonte, de préférence en aluminium.

4. Agencement de compartiment moteur selon l'une quelconque des revendications 1 à 3, **caractérisé en ce que** le cadre auxiliaire (1) est réalisé en une seule partie.

5. Agencement de compartiment moteur selon l'une quelconque des revendications 1 à 3, **caractérisé en ce que** le cadre auxiliaire (1) est réalisé en trois parties, les bras de fixation (3) étant disposés sur les consoles extérieures du cadre auxiliaire (1), qui sont connectées les unes aux autres par le biais de la partie centrale du cadre auxiliaire (2).
